# FASCICULE DE BREVET EUROPEEN

(11) **EP 2 539 675 B1**
(45) Date de publication et mention de la délivrance du brevet: **29.04.2015**
(21) Numéro de dépôt: 11704986.6
(22) Date de dépôt: 23.02.2011
(51) Int. Cl.: G01K 13/02

(54) **SONDE BRISE GLACE POUR LA MESURE DE LA TEMPÉRATURE TOTALE D'AIR**
EISBRECHSONDE ZUR MESSUNG DER TOTALLUFTTEMPERATUR
ICE-BREAKING PROBE FOR MEASURING TOTAL AIR TEMPERATURE

(30) Priorité: 25.02.2010 FR 1051350
(43) Date de publication de la demande: 02.01.2013
(73) Titulaire: Auxitrol S.A., 18000 Bourges (FR)
(72) Inventeur: DIJON, Sébastien, F-18190 Corquoy (FR); LAPEYRONNIE, David, F-18340 Levet (FR); LHUILLIER, Bruno, F-36100 Les Bordes (FR)
(74) Mandataire: Regimbeau
(86) Numéro de dépôt international: PCT/EP2011/052701
(87) Numéro de publication internationale: WO 2011/104286

(56) Documents cités:
- FR-A1- 2 680 872
- GB-A- 1 029 522

## Description

### DOMAINE DE L'INVENTION

La présente invention est relative à dispositif pour la mesure d'au moins un paramètre physique sur un flux de fluide, et plus précisément une sonde anti-glace pour la mesure de la température totale.

Elle trouve en particulier avantageusement application dans le domaine de l'aéronautique pour la mesure de température totale d'air en entrée de moteurs et/ou à l'extérieur des aéronefs, tels que des avions de croisière.

### ETAT DE LA TECHNIQUE

Conventionnellement, sur un avion sur lequel sont montés des moteurs, des dispositifs de mesure de température qui mesurent la température des flux d'air sont disposés dans l'entrée d'air ou près de l'admission des moteurs, ou sur une surface externe de l'avion.

L'air sur la surface externe d'un avion forme un flux d'air à grande vitesse, et il est nécessaire de mesurer la température totale de ce flux d'air. Il existe plusieurs types de sondes permettant de mesurer la température totale de l'air. En particulier, il est possible d'utiliser un dispositif de mesure de température ayant une structure dans laquelle la température totale est mesurée au moyen d'une réduction du débit du flux d'air passant à travers un passage intégrant un élément sensible. Un tel dispositif de mesure est par exemple décrit dans la demande de brevet français FR 91-10845 déposée par la demanderesse le 2 septembre 1991 et publiée sous la référence FR 2 680 872.

Cependant, lorsqu'un avion vole dans des conditions de givre ou de neige, alors ce givre et/ou cette neige viennent s'accumuler sur les parois de la sonde et entrainer la formation de glace adhérant aux parois, ce qui peut perturber le fonctionnement de la sonde si une quantité trop importante de glace est présente. En outre, si le givre et/ou la neige pénètrent dans la fenêtre intégrant le capteur destiné à mesurer le flux d'air, il peut également y avoir formation de glace dans cette zone, ce qui peut causer des imprécisions dans les mesures, voire même empêcher le capteur de fonctionner.

Diverses solutions ont été proposées pour remédier à ces problèmes de dysfonctionnement dus à la formation de glace sur la sonde.

Une première solution consiste à utiliser des sonde de mesure intégrant un mécanisme de chauffage prévu pour chauffer le corps de la sonde et ainsi éviter que de la glace ne se forme sur les parois de ladite sonde. Si de tels systèmes sont assez efficaces pour éviter que du givre et/ou de la neige n'adhère au corps de sonde, les mesures faites par les éléments sensibles de la sonde sont généralement perturbées par le mécanisme de chauffage utilisé, ce qui entraine des imprécisions sur les valeurs des paramètres mesurés et perturbe le fonctionnement normal de la sonde puisque cela complexifie la disponibilité de l'information car il est nécessaire de compenser avec différents algorithmes (en fonction de l'alimentation ou non de la sonde).

D'autres solutions ont donc été proposées pour éviter d'avoir recours à un tel mécanisme de chauffage supplémentaire. Ainsi, il a par exemple été proposé dans le brevet US 5,752,674 publié le 19 mai 1998 d'utiliser un bouclier brise glace destiné à être positionné en amont de la sonde dans le sens d'écoulement du fluide de manière à favoriser la croissance de glace sur ce bouclier plutôt que sur la sonde. Le bouclier brise glace proposé dans ce document présente une forme complexe, comprenant plusieurs portions en forme de lame, toutes différentes les unes des autres, et ce de manière à créer plusieurs zones de formation de glace. Puisque la glace se forme sur le bouclier en plusieurs endroits, alors les glaçons formés sont de plus petite taille comparativement à un unique glaçon qui se formerait sur une unique portion en forme de lame, de sorte que lorsque ces glaçons se brisent et sont arrachés du bouclier, leur petite taille permet de réduire les risques d'endommager des éléments situés en aval de la sonde. La fabrication d'un tel bouclier anti glace est toutefois très complexe du fait de sa forme très spécifique. Par ailleurs, les multiples portions en forme de lame fragilisent la structure globale du bouclier, ce qui est d'autant plus vrai que ce bouclier est rapporté sur le corps de sonde ce qui fragilise également l'ensemble.

Dans la demande de brevet français FR 02-02967 publiée le 20 septembre 2002 sous la référence FR 2 822 230, il est proposé une sonde dont le corps est profilé pour favoriser un arrachement prématuré de la glace venant adhérer aux parois du corps de sonde, de sorte que les morceaux de glace se détachent du corps de sonde à un stade de croissance tel qu'il n'endommage pas les éléments situés en aval de la sonde. Pour ce faire, la sonde proposée à une forme de lame avec des dimensions très particulières pour réduire la surface d'adhésion de la glace sur la sonde et également pour que le pouvoir adhésif du corps de sonde soit réduit. La sonde proposée est ainsi très fine, avec des angles d'inclinaison par rapport au plan de fixation de la sonde très important, ce qui fragilise la sonde en tant que telle, ce qui peut être problématique en cas d'utilisation poussée de la sonde, dans des conditions extrêmes.

Un but de la présente invention est donc de proposer un dispositif de mesure d'un paramètre physique d'un écoulement de fluide, destiné à être placé sur un aéronef, permettant à la sonde de fonctionner dans toutes conditions climatiques, en particulier en présence de givre et/ou de neige, sans perturbation des mesures effectuées, et permettant de résoudre au moins l'un des inconvénients précités.

Un but de la présente invention est en particulier de proposer une sonde anti-glace qui peut être fabriquée de façon simple, et qui présente une résistance accrue dans des conditions climatiques extrêmes.

La sonde proposée permet en outre d'éviter toute détérioration d'éléments placés en aval de la sonde par rapport au sens d'écoulement du fluide, en limitant la taille des morceaux de glace se détachant du corps de sonde.

### EXPOSE DE L'INVENTION

A cette fin, on propose un dispositif de mesure d'au moins un paramètre physique d'un écoulement de fluide, notamment la température totale de l'air, comprenant :
- un corps profilé ayant une forme allongée selon un axe longitudinal (L), et présentant au moins deux parois agencées de manière contigüe l'une par rapport à l'autre selon un angle aigu pour former une portion en coin, ladite portion en coin s'étendant selon une direction parallèle à l'axe longitudinal (L) du corps profilé ;
- au moins un élément sensible pour mesurer le paramètre physique d'écoulement du fluide, ledit élément sensible étant disposé dans une fenêtre ménagée à travers le corps profilé,
caractérisé en ce que chacune des parois formant la portion en coin comprend au moins une entaille formant un renvoi d'angle par rapport à ladite paroi de manière à fragiliser la formation de glace sur la portion en coin.

La ou les entailles prévues sur la portion en coin sont distinctes de la fenêtre traversante à l'intérieur de laquelle est disposé l'élément sensible.

Des aspects préférés mais non limitatifs de ce dispositif de mesure, pris seuls ou en une quelconque combinaison techniquement possible, sont les suivants :
- le corps profilé présente une symétrie par rapport à un plan médian passant par l'axe longitudinal (L), les parois formant la portion en coin comprenant le même nombre d'entailles symétriques par rapport audit plan.
- chaque entaille a une forme allongée selon une direction perpendiculaire à l'axe longitudinal (L) du corps profilé.
- chaque entaille ne s'étend pas jusqu'à l'arête commune aux deux parois formant la portion en coin.
- chacune des parois formant la portion en coin comprend trois entailles, l'une des entailles étant formée en regard de la fenêtre ménagée à travers le corps profilé comprenant l'élément sensible.
- les deux parois formant la portion en coin sont agencées selon un angle d'au moins 30°, et de préférence compris entre 35° et 40°.
- les surfaces des entailles formées sur chacune des parois de la portion en coin forment entre elles un angle d'au moins 25°, et de préférence compris entre 25° et 30°, cet angle étant en outre inférieur à l'angle formé entre les parois de la portion en coin.
- le corps profilé s'étend à partir d'une bride de fixation, ladite bride de fixation présentant une portée définissant un plan de fixation pour le dispositif de mesure, et dans lequel la fenêtre comprenant l'élément sensible est ménagée dans le corps profilé à l'extrémité opposée par rapport à l'extrémité couplée à la bride de fixation.
- le corps profilé comprend deux parois complémentaires s'étendant respectivement à partir des deux parois formant la portion en coin, lesdites deux parois complémentaires étant sensiblement parallèles l'une par rapport à l'autre et définissant une portion principale du corps profilé.
- la fenêtre comprenant l'élément sensible est formée à travers la portion principale du corps profilé depuis l'une des deux parois complémentaires vers l'autre des deux parois complémentaires.
- chacune des parois complémentaires est agencée par rapport à la paroi correspondante de la portion en coin de manière à former un décrochement.
- chaque entaille s'étend jusqu'au décrochement formé entre les parois de la portion en coin et les parois complémentaires de la portion principale.
- le corps profilé comprend deux autres parois complémentaires s'étendant respectivement à partir des deux parois complémentaires parallèles l'une par rapport à l'autre formant la portion principale, lesdites deux autres parois complémentaires étant en outre agencées de manière contigüe l'une par rapport à l'autre selon un angle aigu pour former une deuxième portion en coin, ladite deuxième portion en coin s'étendant selon une direction parallèle à l'axe longitudinal (L) du corps profilé.
- le corps profilé est dimensionné à partir d'une unité de longueur U_{L} les principes suivants :
   o les parois formant la première portion en coin sont identiques, de sorte que la section transversale de ladite première portion en coin est un triangle isocèle avec une hauteur de dimension comprise entre 2 U_{L} et 4 U_{L}, de préférence 3 U_{L}, et une base de dimension comprise entre 1 U_{L} et 3 U_{L}, de préférence 1,5 U_{L} ;
   o les parois complémentaires formant la portion principale sont identiques, de sorte que la section transversale de ladite portion principale est un rectangle avec une longueur de dimension comprise entre 1 U_{L} et 3 U_{L}, de préférence 2 U_{L}, et une largeur de dimension comprise entre 1 U_{L} et 1,5 U_{L}, de préférence 1,2 U_{L} ;
   o les autres parois complémentaires formant la deuxième portion en coin sont identiques, de sorte que la section transversale de ladite deuxième portion en coin est un triangle isocèle avec une hauteur de dimension comprise entre 1 U_{L} et 2 U_{L}, de préférence 1,5 U_{L}, et une base de dimension comprise entre 1 U_{L} et 1,5 U_{L}, de préférence 1,2 U_{L}.
- deux éléments sensibles sont agencés dans la fenêtre ménagée à travers le corps profilé, lesdits éléments sensibles ayant une forme cylindrique de diamètre Φ et étant disposés selon un axe parallèle à l'axe longitudinal (L) du corps profilé, lesdits éléments sensibles étant positionnés de sorte que :
   o la distance entre les axes longitudinaux des deux éléments sensibles est comprise entre 1 Φ et 3 Φ, et est de préférence de 2 Φ ;
   o la distance entre l'axe longitudinal (L) de chaque élément sensible et la base de la section transversale triangulaire caractéristique de la première portion en coin est comprise entre 3 Φ et 5 Φ, et est de préférence de 4,5 Φ ;
   o la distance entre l'axe longitudinal (L) de chaque élément sensible et la base de la section transversale triangulaire caractéristique de la deuxième portion en coin est comprise entre 2 Φ et 3 Φ, et est de préférence de 2,5 Φ.
- chaque paroi du corps profilé est sensiblement plane.

### DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :
- la figure 1 est une vue tridimensionnelle d'une sonde anti-glace selon un premier mode de réalisation de l'invention ;
- le figure 2 est une vue de côté de la sonde anti-glace de la figure 1 ;
- les figures 3a, 3b, et 3c sont des vues en coupe de la sonde anti-glace de la figure 1 selon les lignes A-A, B-B, et C-C respectivement ;
- les figures 4a et 4b sont des vues en coupe représentant schématiquement la formation de glace sur la portion en lame de la sonde anti-glace de la figure 1 ;
- la figure 5 est une vue tridimensionnelle d'une sonde anti-glace selon un deuxième mode de réalisation de l'invention ;
- la figure 6 est une vue de face de la sonde anti-glace de la figure 5 ;
- la figure 7 est une vue tridimensionnelle d'une sonde anti-glace selon un troisième mode de réalisation de l'invention ;
- les figures 8a, et 8b sont des vues en coupe de la sonde anti-glace de la figure 7 selon les lignes A-A, et B-B respectivement ;
- la figure 9 est une vue tridimensionnelle d'une sonde anti-glace selon un quatrième mode de réalisation de l'invention ;
- la figure 10 est une représentation schématique illustrant le dimensionnement d'une sonde anti-glace selon l'invention.

### DESCRIPTION DETAILLEE DE L'INVENTION

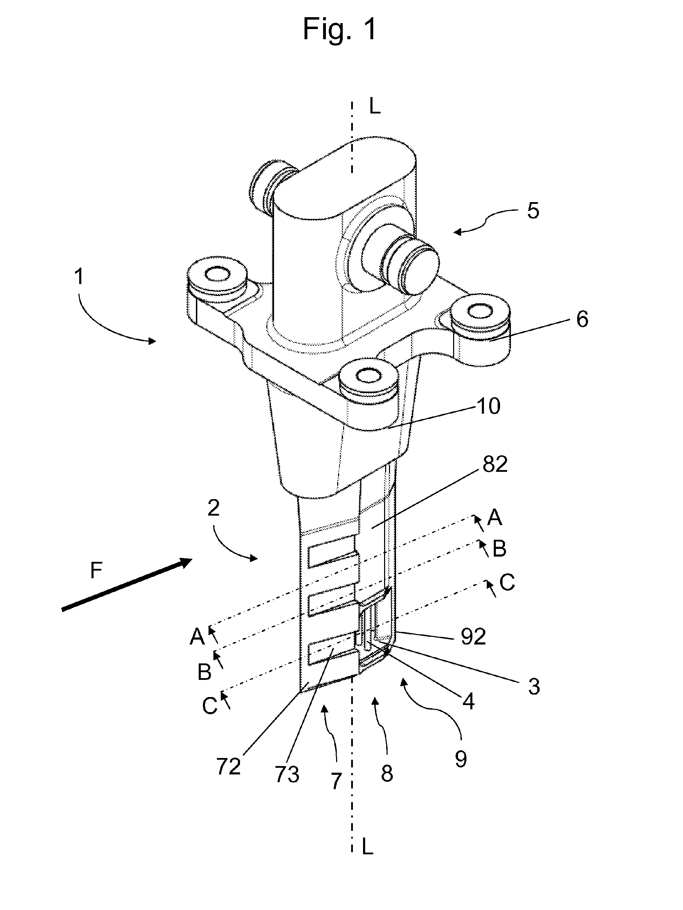

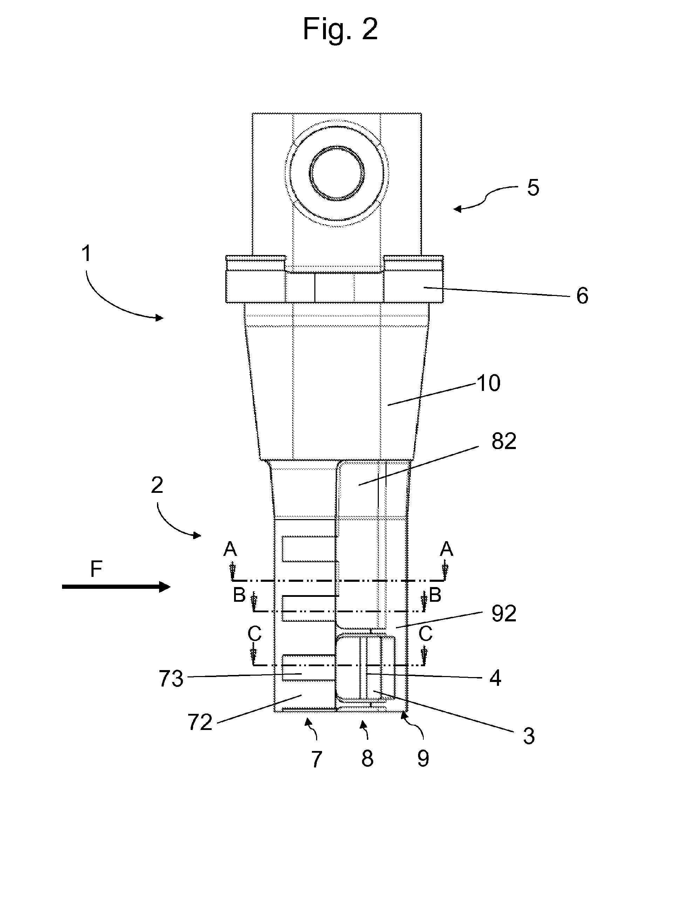

Les figures 1 et 2 sont respectivement une vue en perspective et une vue de côté d'une sonde anti-glace 1 pour la mesure de paramètres physiques d'un flux de fluide représenté par la flèche F.

La sonde 1 anti-glace comprend un corps profilé 2 ayant une forme sensiblement allongée selon un axe longitudinal L.

Comme il ressort des figures 1 et 2, une fenêtre 3 traversante est aménagée à travers le corps profilé 2 pour permettre l'écoulement d'un flux à mesurer, ce flux étant prélevé sur le flux de fluide F, entre un orifice d'entrée et un orifice de sortie de ladite fenêtre 3, chaque orifice étant situé sur des faces opposées du corps profilé 2. La fenêtre 3 forme ainsi un conduit traversant entre les deux parois du corps profilé 2 de la sonde. Cette fenêtre 3 ménagée à travers le corps de sonde 2 permet de placer un ou plusieurs capteurs 4 pour la mesure de paramètres physiques du flux de fluide tel que pour la mesure de la température par exemple. On pourra ainsi prévoir tout élément sensible connu de l'homme du métier ayant par exemple une forme cylindrique allongée, agencée dans la fenêtre 3 de manière à positionner l'axe de l'élément sensible 4 sensiblement parallèle à l'axe longitudinal L caractérisant la forme allongée du corps de sonde 2.

La sonde anti-glace 1 comprend en outre de préférence une bride de fixation 5 à partir de laquelle s'étend le corps profilé 2 de la sonde 1. Cette bride de fixation 5 comprend une portée 6 permettant de fixer ladite sonde anti-glace 1 à une paroi d'un aéronef par exemple, de manière à disposer le corps de sonde 2 selon une direction longitudinale sensiblement perpendiculaire à la direction F du flux de fluide.

Outre la présence d'une fenêtre traversante 3 permettant de positionner les éléments sensibles 4 pour la mesure de paramètres physiques caractérisant le fluide, le corps profilé 2 a une forme particulière permettant d'éviter que la formation de glace ne vienne perturber les mesures effectuées par le ou les éléments sensibles 4 et également pour éviter que la glace formée sur la sonde 1 ne vienne, en se détachant du corps profilé 2, endommager des éléments de l'aéronef placés en aval de la sonde 1 par rapport à l'écoulement du flux de fluide F.

Ainsi, le corps profilé 2 comprend une portion en coin 7 à l'avant de la sonde 1, c'est-à-dire qu'elle est destinée à être placée en amont selon le sens d'écoulement du flux de fluide F. Cette portion en coin 7 peut ainsi être qualifiée de portion en coin avant.

Plus précisément, le corps profilé 2 comprend deux parois 71 et 72 agencées l'une par rapport à l'autre de manière à avoir une arête contigüe, et à former un angle aigu, cet agencement particulier des parois constituant ainsi la portion en coin 7 du corps profilé 2. L'arête contigüe à ces deux parois 71 et 72 est de préférence agencée suivant une direction parallèle à l'axe longitudinal L du corps profilé 2 de sorte que la portion en coin 7 soit sensiblement perpendiculaire à la portée 6 de la bride de fixation 5 à partir de laquelle s'étend le corps profilé 2 de la sonde 1.

L'angle aigu entre les deux parois 71 et 72 (correspondant à l'angle formé par les deux parois dans le plan transversal de la sonde perpendiculaire à l'axe longitudinal du corps profilé) est choisi pour que le givre et/ou la neige transportés dans le flux de fluide F viennent adhérer aux dites parois 71 et 72 formant la portion en coin 7, plus particulièrement au niveau de la pointe de cette portion en coin 7. Ainsi, on choisira un angle supérieur à 30°, et de préférence compris entre 35° et 40°.

Selon l'invention, la portion en coin 7 du corps profilé 2 de la sonde 1 comprend par ailleurs une pluralité d'entailles 73 creusées sur chacune des parois 71 et 72. Chaque entaille 73 constitue un évidement réalisé en surface de chacune des parois 71 et 72. Ainsi, les entailles 73 ne sont pas traversantes par rapport au corps de sonde ; ce sont des évidements de surface faits sur les parois 71 et 72. Comme on le verra plus loin, ces entailles ont pour objet de venir fragiliser la glace en formation sur les parois 71 et 72 de la portion en coin 7 de manière à fragiliser ce morceau de glace en formation, et à favoriser une cassure prématurée dudit glaçon pour qu'il se brise en une pluralité de morceaux de glace d'une taille suffisamment petite pour ne pas venir endommager les éléments placés et en aval de la sonde 1.

Les entailles 73 formées dans les parois 71 et 72 de la portion en coin 7 peuvent avoir des formes et un positionnement divers, tant que ceux-ci permettent une formation de glace d'abord homogène sur la pointe de la portion en coin 7, c'est-à-dire au niveau de l'arête commune aux parois 71 et 72, puis une croissance différente de cette glace selon qu'elle se forme sur une partie entaillée de la portion en coin 7 ou une partie non entaillée de la portion en coin 7.

De manière préférée, les entailles sont formées de manière symétrique sur chacune des parois 71 et 72 de sorte que la formation et la fragilisation du morceau de glace se font de manière également symétrique lorsque le flux de fluide F vient frapper l'avant de la sonde 1 de manière uniforme, c'est-à-dire suivant une direction perpendiculaire au plan frontal de la sonde 1 passant par son axe longitudinal L.

De préférence, les entailles 73 ont une forme de rainures, s'étendant suivant une direction perpendiculaire à l'axe longitudinal L du corps profilé 2 de la sonde 1. De manière encore préférée, ces rainures sont planes.

Les rainures 73 formées sur chacune des parois 71 et 72 forment de préférence entre elles un angle inférieur à l'angle aigu formé entre les parois 71 et 72 de la portion en coin (angles dans le plan transversal de la sonde perpendiculaire à l'axe longitudinal du corps profilé). On pourra par exemple choisir un angle supérieur à 30° entre les rainures 73 de chacune des parois 71 et 72.

Les entailles 73 formées dans les parois 71 et 72 du corps profilé 2 ne s'étendent pas jusqu'à l'arête contigüe commune auxdites parois 71 et 72. Ainsi, la portion en coin 7 comprend une partie frontale (par rapport à la direction du flux de fluide F) qui est identique sur toute la hauteur de la portion en coin 7.

Outre la portion en coin 7 située en avant du corps de sonde 2 par rapport à la direction du flux de fluide F, le corps profilé 2 comprend une portion principale 8 à travers laquelle est ménagée la fenêtre 3 permettant de positionner les éléments sensibles 4 pour la mesure de paramètres physiques du flux de fluide. Il ressort clairement de cet agencement que les entailles 73 sont distinctes de la fenêtre 3 traversant le corps profilé 2.

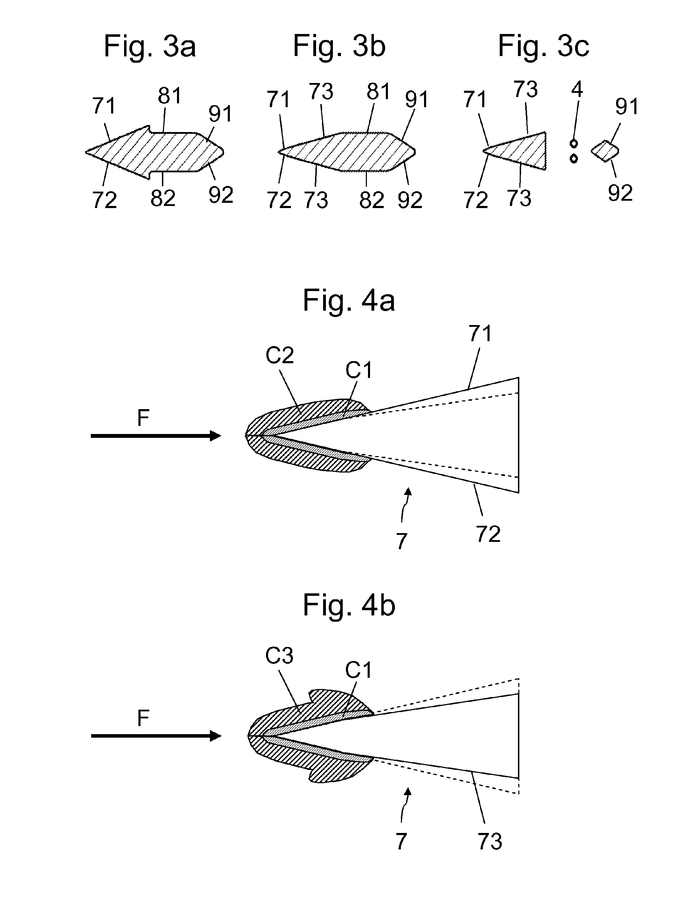

La forme de cette portion principale 8 peut être quelconque mais est de préférence formée par deux parois 81 et 82 parallèles l'une par rapport à l'autre, et parallèles à l'axe longitudinal du corps profilé 2 comme cela est représenté aux figures 1 et 2, et aux figures 3a à 3c représentant des vues en coupe du corps profilé 2 de la figure 1 selon différents plans de coupe.

De préférence, les parois 81 et 82 formant la portion principale 8 du corps profilé 2 s'étendent à partir des parois 71 et 72 de la portion en coin 7 de manière à former un décrochement par rapport à ces parois 71 et 72.

L'utilisation des entailles 73 sur la portion en coin 7 avant de la sonde permet donc de venir fragiliser la glace en formation sur lesdites parois, et favoriser son décrochement de ladite sonde. De ce fait il n'est pas nécessaire que la sonde comprenne un mécanisme de chauffage prévu pour chauffer le corps de sonde afin de faire fondre l'accumulation de glace. Ainsi de préférence, la sonde anti-glace proposée ne comprend pas de mécanisme de chauffage spécifique pour faire fondre la glace.

Le corps profilé 2 de la sonde 1 peut en outre également comprendre une portion en coin arrière 9, c'est-à-dire placée à l'extrémité opposée de la sonde 1 par rapport à la portion en coin 7 selon la direction du flux de fluide F.

Cette deuxième portion en coin 9 est également constituée de deux parois 91 et 92 formant un angle aigu entre elles, ces parois s'étendant à partir des parois 81 et 82 formant la portion principale 8. Les parois 91 et 92 formant la deuxième portion en coin 9 sont de préférence dans le prolongement des parois 81 et 82 de la portion principale 8 de sorte qu'aucun décrochement n'est formé entre la portion principale 8 et la deuxième portion en coin 9 du corps profilé 2 de la sonde 1.

Le corps profilé 2 de la sonde 1 peut s'étendre directement à partir de la portée 6 de la bride de fixation 5. Il peut également être prévu une portion intermédiaire 10 venant allonger le corps profilé 2 de la sonde de manière à déporter l'élément sensible 4 par rapport au plan de fixation de la sonde 1. Cette portion intermédiaire 10 permet également de renforcer la structure globale de la sonde 1, notamment la fixation du corps profilé 2 à la bride de fixation 5.

Les figures 4a et 4b illustrent de manière schématique la formation de glace sur la portion en coin 7 lorsque le flux de fluide F vient frapper le corps profilé 2 de la sonde 1 de manière frontale, c'est-à-dire suivant une direction perpendiculaire au plan frontal de la sonde 1 passant par son axe longitudinal L. Plus précisément, la figure 4a illustre la formation de la glace sur la portion en coin 7 à un niveau des parois 71 et 72 ne comprenant pas d'entaille, tandis que le schéma de la figure 4b illustre la formation de glace sur la portion en coin 7 à un niveau des parois 71 et 72 comprenant une entaille 73.

Lorsque la sonde anti-glace 1 se trouve dans un flux de fluide F comprenant du givre et/ou de la neige, ces éléments viennent adhérer sur les parois 71 et 72 de l'élément en coin 7 au niveau de la pointe de l'élément en coin. L'élément en coin 7 est formé de sorte que sa partie frontale, c'est-à-dire la pointe en avant par rapport au corps profilé 2 de la sonde 1, ait une forme identique sur toute la hauteur ; les entailles 73 prévues dans les parois 71 et 72 ne s'étendent en effet pas jusqu'à la pointe de la portion en coin 7. De cette manière, la formation initiale de la glace sur la portion en coin 7 se fait de manière uniforme sur toute sa hauteur, que la pointe soit en regard d'entailles 73 ou non. La couche de glace initialement formée sur la portion en coin 7 est représentée aux figures 4a et 4b et référencée C1.

Une fois que la couche initiale de glace C1 a été formée sur la partie frontale en pointe de la portion en coin 7, la glace continue de croître à partir de cette couche de base recouvrant la pointe de la portion en coin 7. Toutefois, contrairement au dépôt de la première couche initiale C1 de glace sur la portion en coin 7, la croissance ultérieure de la glace sur cette couche initiale de glace C1 se fait différemment selon que l'on se place à un niveau de la portion en coin 7 ne comprenant pas d'entaille ou à un niveau de la portion en coin 7 comprenant des entailles 73.

En effet, comme on le voit représenter à la figure 4a, lorsque la glace croît sur une partie de la portion en coin 7 ne comprenant pas d'entaille, alors la croissance de la glace se fait de manière sensiblement homogène sur toute la surface de la couche initiale de glace C1. Ainsi, une couche C2 de glace est formée de manière relativement homogène sur la couche initiale de glace C1 adhérant à la pointe de la portion en coin 7 du corps profilé 2 de la sonde 1. Comme cela est représenté sur la figure 4b, la croissance de la glace au niveau d'une partie de la portion en coin 7 comprenant des entailles 73 est différente, celle-ci étant perturbée par le renvoi d'angle formé par ladite entaille 73 par rapport aux parois 71 et 72. La couche de glace C3 formée à un niveau présentant des entailles 73 a donc un profil différent de la couche de glace C2 formé à un niveau de la portion en coin 7 dépourvu d'entaille.

Ainsi la croissance de la glace sur la couche initiale C1 se fait de manière différente selon qu'on se place à un niveau de la portion en coin 7 comprenant des entailles 73 ou à un niveau de la portion en coin 7 ne comprenant pas d'entaille de sorte que le glaçon se formant le long de la portion en coin 7 est fragilisé au fur et à mesure de sa croissance par la présence des entailles 73 dans la portion en coin 7. En outre, les différences constatées dans la croissance de la glace telles qu'illustrées aux figures 4a et 4b, sont de plus en plus marquées au fur et à mesure que la glace croît sur la portion en coin 7 de sorte que la fragilisation progressive du glaçon en formation sur la portion en coin 7 aboutit à une cassure prématurée du glaçon formé sur la portion en coin 7, et par suite à un arrachement de morceaux de glace, cet arrachement étant par ailleurs favorisé par le flux de fluide venant s'impacter contre la glace créant ainsi des déséquilibres.

Ainsi, le design particulier présenté pour le corps profilé 2, comprenant une portion en coin 7 frontale avec des parois 71 et 72 munies d'entailles 73 favorise une croissance inhomogène de la glace sur ladite portion en coin 7, fragilisant de ce fait le glaçon formé le long de la portion en coin 7, ce qui favorise une cassure prématurée dudit glaçon en formation, en des morceaux de glace de petite taille, qui ont l'avantage de ne pas endommager les éléments placés en aval de la sonde anti-glace 1.

Selon les conditions de givre, et en particulier lorsque la température n'est pas trop faible (température légèrement négative, en général supérieure à -5°C), la couche de glace C1 initialement formée sur la pointe de la portion en coin 7 peut avoir tendance à rester fixée aux parois de la portion en coin 7, y compris au moment où les couches de glace supérieures se brisent et s'arrachent de la portion en coin 7 pour être expulsées en aval de la sonde anti-glace 1. Le design particulier de la sonde permet à cette couche de glace C1 de rester toujours très fine, ne modifiant en conséquence pas l'équilibre dimensionnel de la sonde, ce qui permet de ne pas perturber les mesures de température du flux d'air. En particulier, les dimensions de cette couche de glace C1 impliquent une modification du profil de la sonde qui est négligeable en ce qui concerne l'erreur de récupération (l'erreur de récupération étant liée à la forme géométrique de la sonde et à sa capacité à convertir l'énergie cinétique en énergie d'agitation moléculaire).

En outre, cette couche de glace C1, qu'elle se soit reformée après arrachement total du glaçon ou qu'elle soit restée accrochée sur la portion en coin, sert de base à la croissance ultérieure de nouveaux glaçons sur la portion en coin 7 selon le même mécanisme de croissance que celui évoqué plus haut, à savoir une croissance inhomogène selon que l'on se place à un niveau de la portion en coin 7 comprenant des entailles 73 ou à un niveau de la portion en coin 7 ne comprenant pas de telles entailles.

Le fait que l'angle formé par les parois 71 et 72 de la portion en coin 7 située à l'avant de la sonde 1 soit relativement important (de préférence supérieur à 30° et encore de préférence compris entre 35° et 40°) permet de protéger les capteurs 4 de mesure de paramètres physiques du flux de fluide puisque l'angle important formé par ces parois permet d'écarter les morceaux de glace venant de s'arracher de la portion en coin 7 vers l'extérieur par rapport au corps profilé 2 de la sonde 1. Ce profil particulier de la portion en coin 7 permet en effet d'éviter que les morceaux de glace s'arrachant de la portion en coin 7 viennent par exemple s'engouffrer à l'intérieur de la fenêtre 3 où sont placés les capteurs 4 de mesure, ce qui pourrait perturber leur fonctionnement voire les endommager.

Sur le mode de réalisation présenté aux figures 1 et 2, une entaille 73 est placée en regard de la fenêtre traversante 3 à l'intérieur duquel sont placés les capteurs 4. Ceci présente l'avantage de favoriser la fragilisation de la glace en formation sur la portion en coin 7 au niveau de la fenêtre traversante 3 de sorte que les morceaux de glace s'arrachant de la portion en coin 7 au niveau de la fenêtre traversante 3 seront particulièrement de petite taille. Ainsi, si malgré le profil particulier de la portion en coin 7 destiné à écarter les morceaux de glace s'arrachant de cette portion en coin 7, des morceaux de glace venaient tout de même à pénétrer dans la fenêtre traversante 3, le fait que ces morceaux de glace soient de petite taille permet de diminuer le risque d'endommagement des capteurs de mesure 4.

Le nombre d'entailles 73 formées sur la portion en coin 7 et leur positionnement relatif le long des parois de la portion en coin 7 peuvent varier. Le mode de réalisation présenté aux figures 1 et 2 constitue un mode de réalisation optimal pour la sonde anti-glace, dans lequel chaque paroi 71 et 72 comprend trois entailles 73, en forme de rainures, réparties de manière régulière le long de la portion en coin 7, multipliant ainsi les zones de fragilisation de la glace en formation sur cette portion en coin 7, et favorisant donc la formation d'autant de morceaux de glace dont la taille est réduite. En outre, comme on vient de l'indiquer, une de ces entailles 73 est placée en regard de la fenêtre traversante 3 formée dans le corps profilé 2 de la sonde 1 pour intégrer les capteurs de mesure 4, ce qui permet de réduire les risques d'endommagement de ces éléments sensibles 4 par des morceaux de glace qui viendraient traverser la fenêtre 3 malgré le profil évasé de la portion en coin 7.

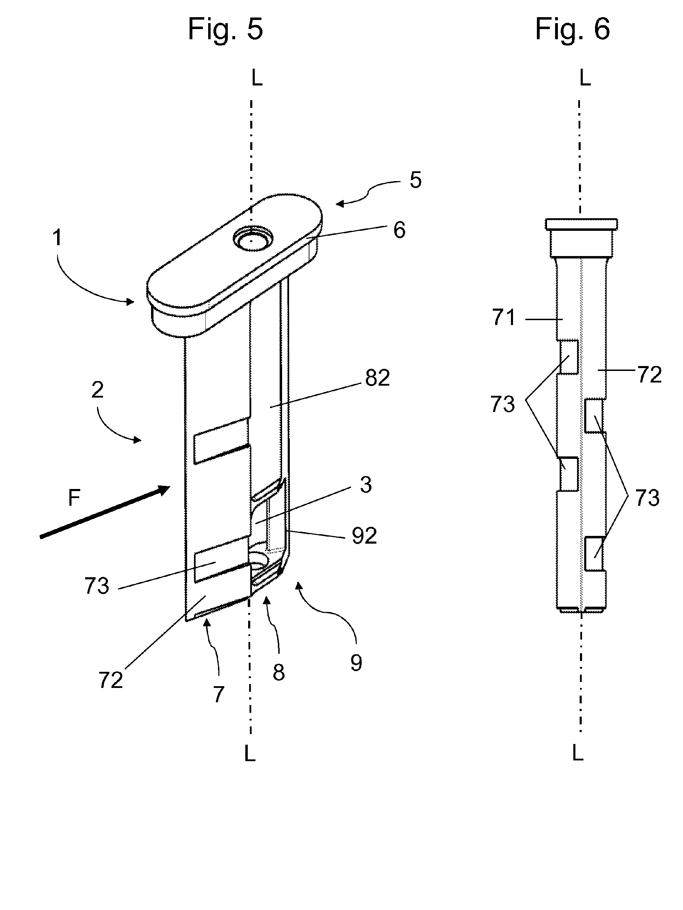

Il est toutefois possible d'envisager d'autres design pour la portion en coin 7 située à l'avant de la sonde anti-glace 1. En particulier les figures 5 et 6 illustrent un mode de réalisation pour lequel deux entailles 73 sont prévus sur chaque paroi (71;72), ces entailles se présentant sous la forme de rainures placées à des positions différentes le long de la portion en coin 7. De préférence, comme cela est illustré à la figure 6, les entailles 73 prévus sur la première paroi 71 sont décalées par rapport aux entailles prévues sur la deuxième paroi 72, ce qui permet de favoriser une croissance inhomogène de la glace, et donc une cassure prématurée de celle-ci.

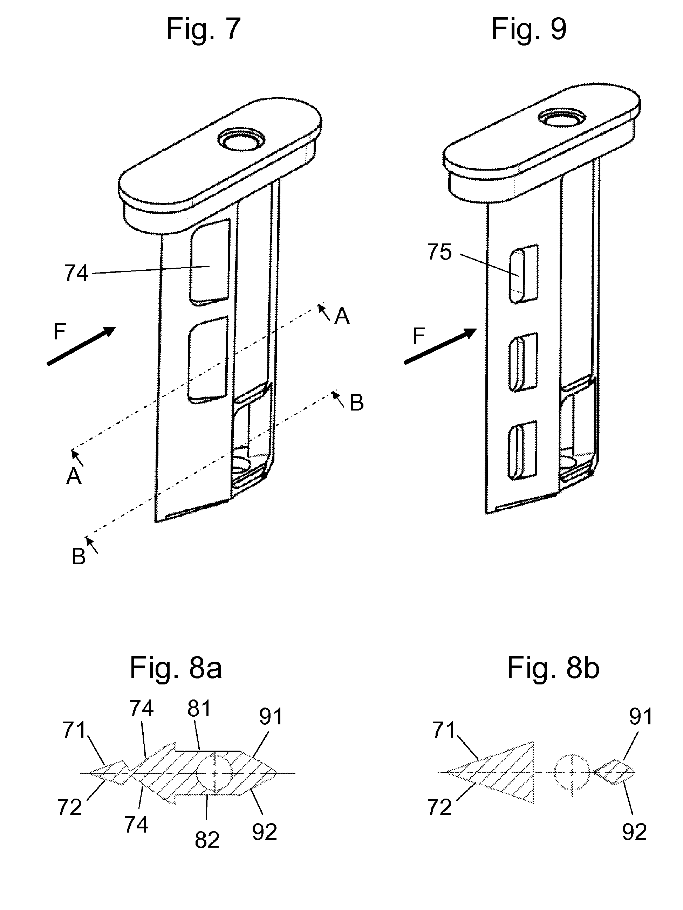

Le mode de réalisation présenté aux figures 7, 8a et 8b comprend quant à lui également deux entailles 74 réparties d'une manière particulière le long de la portion en coin 7. Toutefois, les entailles 74 illustrées dans ce mode de réalisation ne sont pas des rainures mais des évidements plus complexes ayant une forme sensiblement allongée selon l'axe longitudinal L du corps profilé 2.

Selon encore un mode de réalisation différent de la sonde, tel qu'illustré à la figure 9, on prévoit des entailles 75 se présentant également sous la forme d'évidements allongé selon l'axe longitudinal L du corps profilé, à la différence que ces évidements sont de plus petite taille par rapport aux évidements du mode de réalisation de la figure 7, notamment en ce qui concerne la dimension selon l'axe longitudinal L. Dans ce cas, comme illustré à la figure 9, il est préférable de prévoir un nombre plus important d'entailles le long du corps profilé, par exemple trois entailles, en agençant une entaille 75 en regard de la fenêtre 3 destinée à recevoir les éléments sensibles 4.

Le dimensionnement de la sonde anti-glace 1 peut être optimisé pour que celle-ci soit opérationnelle dans n'importe quelle condition de fonctionnement. A cette fin, il est important que la forme de la sonde permette d'éviter que tout élément autre que le flux de fluide F à mesurer ne pénètre à l'intérieur de la fenêtre traversante 3 comprenant les éléments sensibles pour la mesure de paramètres physiques du flux de fluide. Ceci permettra en particulier que la sonde anti-glace 1 puisse fonctionner dans des conditions de givre, de neige ou de pluie, sans que ces particules ne viennent pénétrer à l'intérieur de la fenêtre traversante 3. De manière préférée, chaque paroi formant le corps de sonde 2 est sensiblement plane.

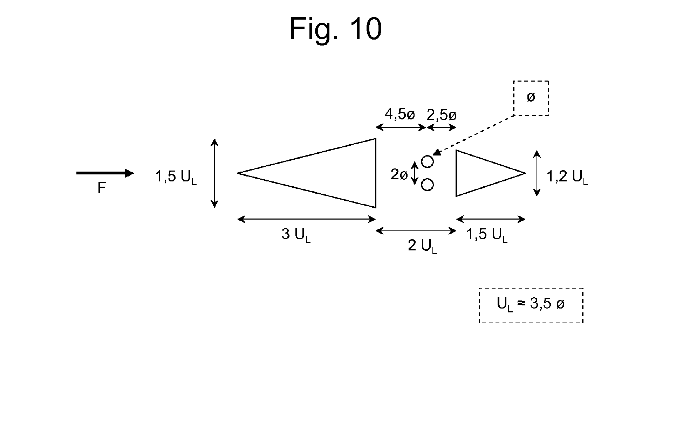

On peut donc dimensionner la sonde 1 en utilisant les règles de dimensionnement ci dessous, et dont la figure 10 illustre le dimensionnement optimal.

Le corps profilé 2 est dimensionné à partir d'une unité de longueur U_{L} selon les principes suivants (par l'expression « x U_{L} », on entend « x fois la longueur U_{L} ») :
- les parois formant la première portion en coin 7 sont identiques, de sorte que la section transversale (section dans le plan transversal du corps profilé 2 perpendiculaire à l'axe longitudinal L) de ladite première portion en coin 7 est un triangle isocèle avec une hauteur de dimension comprise entre 2 U_{L} et 4 U_{L}, de préférence 3 U_{L}, et une base de dimension comprise entre 1 U_{L} et 2 U_{L}, de préférence 1,5 U_{L} ;
- les parois complémentaires formant la portion principale 8 sont identiques, de sorte que la section transversale (section dans le plan transversal du corps profilé 2 perpendiculaire à l'axe longitudinal L) de ladite portion principale 8 est un rectangle avec une longueur de dimension comprise entre 1 U_{L} et 2 U_{L}, de préférence 2 U_{L}, et une largeur de dimension comprise entre 1 U_{L} et 1,5 U_{L}, de préférence 1,2 U_{L} ;
- les autres parois complémentaires formant la deuxième portion en coin 9 sont identiques, de sorte que la section transversale (section dans le plan transversal du corps profilé 2 perpendiculaire à l'axe longitudinal L) de ladite deuxième portion en coin 9 est un triangle isocèle avec une hauteur de dimension comprise entre 1 U_{L} et 2 U_{L}, de préférence 1,5 U_{L}, et une base de dimension comprise entre 1 U_{L} et 1,5 U_{L}, de préférence 1,2 U_{L}.

Par ailleurs, lorsque la sonde comprend deux éléments sensibles 4 placés dans la fenêtre 3 ménagé à travers le corps profilé 2, lesdits éléments sensibles 4 ayant une forme cylindrique de diamètre Φ et étant disposés selon un axe parallèle à l'axe longitudinal L du corps profilé 2, il est préférable que ces éléments sensibles 4 soient positionnés de sorte que (par l'expression « x Φ », on entend « x fois le diamètre Φ ») :
- la distance entre les axes longitudinaux des deux éléments sensibles 4 est comprise entre 1 Φ et 3 Φ, et est de préférence de 2 Φ ;
- la distance entre l'axe longitudinal de chaque élément sensible 4 et la base de la section transversale triangulaire caractéristique de la première portion en coin 7 est comprise entre 3 Φ et 5 Φ, et est de préférence de 4,5 Φ ;
- la distance entre l'axe longitudinal de chaque élément sensible 4 et la base de la section transversale triangulaire caractéristique de la deuxième portion en coin 9 est comprise entre 2 Φ et 4 Φ, et est de préférence de 2,5 Φ.

Dans ce cas, il est préférable que le rapport entre le diamètre Φ de l'élément sensible 4 et l'unité de longueur U_{L} permettant de dimensionner le corps profilé 2 soit tel que le rapport entre unité de longueur U_{L} et le diamètre Φ soit compris entre 3 et 4, avec de préférence U_{L}≈3,5.Φ.

## Revendications

1. Dispositif de mesure d'au moins un paramètre physique d'un écoulement de fluide, notamment la température totale de l'air, comprenant :
- un corps profilé (2) ayant une forme allongée selon un axe longitudinal (L), et présentant au moins deux parois agencées de manière contigüe l'une par rapport à l'autre selon un angle aigu pour former une portion en coin (7), ladite portion en coin (7) s'étendant selon une direction parallèle à l'axe longitudinal (L) du corps profilé (2) ;
- au moins un élément sensible (4) pour mesurer le paramètre physique d'écoulement du fluide, ledit élément sensible (4) étant disposé dans une fenêtre (3) ménagée à travers le corps profilé (2),
**caractérisé en ce que** chacune des parois (71;72) formant la portion en coin (7) comprend au moins une entaille distincte de la fenêtre (3), ladite entaille formant un renvoi d'angle par rapport à ladite paroi (71;72) pour fragiliser la formation de glace sur la portion en coin (7).

2. Dispositif selon la revendication 1, dans lequel le corps profilé (2) présente une symétrie par rapport à un plan médian passant par l'axe longitudinal (L), les parois (71;72) formant la portion en coin (7) comprenant le même nombre d'entailles symétriques par rapport audit plan.

3. Dispositif selon l'une des revendications 1 ou 2, dans lequel chaque entaille a une forme allongée selon une direction perpendiculaire à l'axe longitudinal (L) du corps profilé (2).

4. Dispositif selon l'une des revendications 1 à 3, dans lequel chaque entaille ne s'étend pas jusqu'à l'arête commune aux deux parois (71;72) formant la portion en coin (7).

5. Dispositif selon l'une des revendications 1 à 4, dans lequel chacune des parois (71;72) formant la portion en coin (7) comprend trois entailles, l'une des entailles étant formée en regard de la fenêtre (3) ménagée à travers le corps profilé (2) comprenant l'élément sensible (4).

6. Dispositif selon l'une des revendications 1 à 5, dans lequel les deux parois (71;72) formant la portion en coin (7) sont agencées selon un angle d'au moins 30°, et de préférence compris entre 35° et 40°.

7. Dispositif selon l'une des revendications 1 à 6, dans lequel les surfaces des entailles formées sur chacune des parois (71;72) de la portion en coin (7) forment entre elles un angle d'au moins 25°, et de préférence compris entre 25° et 30°, cet angle étant en outre inférieur à l'angle formé entre les parois (71;72) de la portion en coin (7).

8. Dispositif selon l'une des revendications 1 à 7, dans lequel le corps profilé (2) s'étend à partir d'une bride de fixation (5), ladite bride de fixation (5) présentant une portée (6) définissant un plan de fixation pour le dispositif de mesure, et dans lequel la fenêtre (3) comprenant l'élément sensible (4) est ménagée dans le corps profilé (2) à l'extrémité opposée par rapport à l'extrémité couplée à la bride de fixation (5).

9. Dispositif selon l'une des revendications 1 à 8, dans lequel le corps profilé (2) comprend deux parois complémentaires (81;82) s'étendant respectivement à partir des deux parois (71;72) formant la portion en coin (7), lesdites deux parois complémentaires (81;82) étant sensiblement parallèles l'une par rapport à l'autre et définissant une portion principale (8) du corps profilé (2).

10. Dispositif selon la revendication 9, dans lequel la fenêtre (3) comprenant l'élément sensible (4) est formée à travers la portion principale (8) du corps profilé (2) depuis l'une des deux parois complémentaires (81;82) vers l'autre des deux parois complémentaires (81;82).

11. Dispositif selon l'une des revendications 9 ou 10, dans lequel chacune des parois complémentaires (81;82) est agencée par rapport à la paroi correspondante de la portion en coin (7) de manière à former un décrochement.

12. Dispositif selon la revendication 11, dans lequel chaque entaille s'étend jusqu'au décrochement formé entre les parois (71;72) de la portion en coin (7) et les parois complémentaires (81;82) de la portion principale (8).

13. Dispositif selon l'une des revendications 9 à 12, dans lequel le corps profilé (2) comprend deux autres parois complémentaires (91;92) s'étendant respectivement à partir des deux parois complémentaires (81;82) parallèles l'une par rapport à l'autre formant la portion principale (8), lesdites deux autres parois complémentaires (91;92) étant en outre agencées de manière contigüe l'une par rapport à l'autre selon un angle aigu pour former une deuxième portion en coin (9), ladite deuxième portion en coin (9) s'étendant selon une direction parallèle à l'axe longitudinal (L) du corps profilé (2).

14. Dispositif selon la revendication 13, dans lequel le corps profilé (2) est dimensionné à partir d'une unité de longueur U_{L} les principes suivants :
- les parois (71;72) formant la première portion en coin (7) sont identiques, de sorte que la section transversale de ladite première portion en coin (7) est un triangle isocèle avec une hauteur de dimension comprise entre 2 U_{L} et 4 U_{L}, de préférence 3 U_{L}, et une base de dimension comprise entre 1 U_{L} et 3 U_{L}, de préférence 1,5 U_{L} ;
- les parois complémentaires (81;82) formant la portion principale (8) sont identiques, de sorte que la section transversale de ladite portion principale (8) est un rectangle avec une longueur de dimension comprise entre 1 U_{L} et 3 U_{L}, de préférence 2 U_{L}, et une largeur de dimension comprise entre 1 U_{L} et 1,5 U_{L}, de préférence 1,2 U_{L} ;
- les autres parois complémentaires (91;92) formant la deuxième portion en coin (9) sont identiques, de sorte que la section transversale de ladite deuxième portion en coin (9) est un triangle isocèle avec une hauteur de dimension comprise entre 1 U_{L} et 2 U_{L}, de préférence 1,5 U_{L}, et une base de dimension comprise entre 1 U_{L} et 1,5 U_{L}, de préférence 1,2 U_{L}.

15. Dispositif selon l'une des revendications 13 ou 14, dans lequel deux éléments sensibles (4) sont agencés dans la fenêtre (3) ménagée à travers le corps profilé (2), lesdits éléments sensibles (4) ayant une forme cylindrique de diamètre Φ et étant disposés selon un axe parallèle à l'axe longitudinal (L) du corps profilé (2), lesdits éléments sensibles (4) étant positionnés de sorte que :
- la distance entre les axes longitudinaux des deux éléments sensibles (4) est comprise entre 1 Φ et 3 Φ, et est de préférence de 2 Φ ;
- la distance entre l'axe longitudinal (L) de chaque élément sensible (4) et la base de la section transversale triangulaire caractéristique de la première portion en coin (7) est comprise entre 3 Φ et 5 Φ, et est de préférence de 4,5 Φ ;
- la distance entre l'axe longitudinal (L) de chaque élément sensible (4) et la base de la section transversale triangulaire caractéristique de la deuxième portion en coin (9) est comprise entre 2 Φ et 3 Φ, et est de préférence de 2,5 Φ.

16. Dispositif selon l'une des revendications précédentes, dans lequel chaque paroi du corps profilé (2) est sensiblement plane.

## Patentansprüche

1. Vorrichtung zum Messen mindestens eines physikalischen Parameters einer Fluidströmung, insbesondere die Totaltemperatur der Luft, umfassend:
- einen Profilkörper (2), der eine entlang einer Längsachse (L) langgezogene Form hat und mindestens zwei Wände aufweist, die relativ zueinander benachbart in einem spitzen Winkel angeordnet sind, um einen keilförmigen Abschnitt (7) zu bilden, wobei der keilförmige Abschnitt (7) sich in einer Richtung erstreckt, die zu der Längsachse (L) des Profilkörpers (2) parallel ist;
- mindestens ein empfindliches Element (4), um den physikalischen Parameter der Fluidströmung zu messen, wobei das empfindliche Element (4) in einem Fenster (3) angeordnet ist, das durch den Profilkörper (2) hindurch vorgesehen ist,
**dadurch gekennzeichnet, dass** jede der Wände (71; 72), die den keilförmigen Abschnitt (7) bilden, mindestens eine Einkerbung umfasst, die von dem Fenster (3) verschieden ist, wobei die Einkerbung eine Eckumlenkung relativ zu der Wand (71; 72) bildet, um die Bildung von Eis auf dem keilförmigen Abschnitt (7) zu schwächen.

2. Vorrichtung nach Anspruch 1, wobei der Profilkörper (2) eine Symmetrie relativ zu einer Mittelebene, die durch die Längsachse L verläuft, aufweist, wobei die Wände (71; 72), die den keilförmigen Abschnitt (7) bilden, die gleiche Anzahl von Einkerbungen, die relativ zu der Ebene symmetrisch sind, aufweisen.

3. Vorrichtung nach einem der Ansprüche 1 oder 2, wobei jede Einkerbung eine Form hat, die entlang einer zu der Längsachse (L) des Profilkörpers (2) senkrechten Richtung langgezogen ist.

4. Vorrichtung nach einem der Ansprüche 1 bis 3, wobei sich jede Einkerbung nicht bis zu der Kante erstreckt, die den zwei Wänden (71; 72), die den keilförmigen Abschnitt (7) bilden, gemeinsam ist.

5. Vorrichtung nach einem der Ansprüche 1 bis 4, wobei jede der Wände (71; 72), die den keilförmigen Abschnitt (7) bilden, drei Einkerbungen umfasst, wobei die eine der Einkerbungen dem Fenster (3) gegenüber gebildet ist, das durch den Profilkörper (2) hindurch vorgesehen ist und das empfindliche Element (4) umfasst.

6. Vorrichtung nach einem der Ansprüche 1 bis 5, wobei die zwei Wände (71; 72), die den keilförmigen Abschnitt (7) bilden, in einem Winkel von mindestens 30° und bevorzugt zwischen 35° und 40° angeordnet sind.

7. Vorrichtung nach einem der Ansprüche 1 bis 6, wobei die Flächen der Einkerbungen, die in jeder der Wände (71; 72) des keilförmigen Abschnitts (7) gebildet sind, zwischen einander einen Winkel von mindestens 25° und bevorzugt zwischen 25° und 30° bilden, wobei dieser Winkel ferner kleiner als der Winkel ist, der zwischen den Wänden (71; 72) des keilförmigen Abschnitts (7) gebildet ist.

8. Vorrichtung nach einem der Ansprüche 1 bis 7, wobei der Profilkörper (2) sich von einem Befestigungsflansch (5) erstreckt, wobei der Befestigungsflansch (5) eine Auflagefläche (6) aufweist, die eine Befestigungsebene für die Messvorrichtung definiert, und wobei das Fenster (3), welches das empfindliche Element (4) umfasst, in dem Profilkörper (2) an dem Ende vorgesehen ist, das relativ zu dem Ende, das mit dem Befestigungsflansch (5) gekoppelt ist, entgegengesetzt ist.

9. Vorrichtung nach einem der Ansprüche 1 bis 8, wobei der Profilkörper (2) zwei komplementäre Wände (81; 82) umfasst, die sich jeweils von den zwei Wänden (71; 72), die den keilförmigen Abschnitt (7) bilden, erstrecken, wobei die zwei komplementären Wände (81; 82) zueinander im Wesentlichen parallel sind und einen Hauptabschnitt (8) des Profilkörpers (2) bilden.

10. Vorrichtung nach Anspruch 9, wobei das Fenster (3), welches das empfindliche Element (4) umfasst, durch den Hauptabschnitt (8) des Profilkörpers (2) hindurch von einer der zwei komplementären Wände (81; 82) zu der anderen der zwei komplementären Wände (81; 82) gebildet ist.

11. Vorrichtung nach einem der Ansprüche 9 oder 10, wobei jede der komplementären Wände (81; 82) relativ zu der entsprechenden Wand des keilförmigen Abschnitts (7) so angeordnet ist, dass sie einen Rücksprung bildet.

12. Vorrichtung nach Anspruch 11, wobei jede Einkerbung sich bis zu dem Rücksprung erstreckt, der zwischen den Wänden (71; 72) des keilförmigen Abschnitts (7) und den komplementären Wänden (81; 82) des Hauptabschnitts (8) gebildet ist.

13. Vorrichtung nach einem der Ansprüche 9 bis 12, wobei der Profilkörper (2) zwei weitere komplementäre Wände (91; 92) umfasst, die sich jeweils von den zwei komplementären Wänden (81; 82) erstrecken, die zueinander parallel sind und den Hauptabschnitt (8) bilden, wobei die zwei weiteren komplementären Wände (91; 92) ferner relativ zueinander benachbart in einem spitzen Winkel angeordnet sind, um einen zweiten keilförmigen Abschnitt (9) zu bilden, wobei der zweite keilförmige Abschnitt (9) sich in einer Richtung erstreckt, die zu der Längsachse (L) des Profilkörpers (2) parallel ist.

14. Vorrichtung nach Anspruch 13, wobei der Profilkörper (2) ausgehend von einer Längeneinheit U_{L} gemäß den folgenden Prinzipien dimensioniert ist:
- die Wände (71; 72), die den ersten keilförmigen Abschnitt (7) bilden, sind identisch, so dass der Querschnitt des ersten keilförmigen Abschnitts (7) ein gleichschenkeliges Dreieck ist mit einem Höhenmaß, das zwischen 2 U_{L} und 4 U_{L}, bevorzugt 3 U_{L}, beträgt und einem Basismaß, das zwischen 1 U_{L} und 3 U_{L}, bevorzugt 1,5 U_{L}, beträgt;
- die komplementären Wände (81; 82), die den Hauptabschnitt (8) bilden, sind identisch, so dass der Querschnitt des Hauptabschnitts (8) ein Rechteck ist mit einem Längenmaß, das zwischen 1 U_{L} und 3 U_{L}, bevorzugt 2 U_{L}, beträgt, und einem Breitenmaß, das zwischen 1 U_{L} und 1,5 U_{L}, bevorzugt 1,2 U_{L}, beträgt;
- die weiteren komplementären Wände (91; 92), die den zweiten keilförmigen Abschnitt (8) bilden, sind identisch, so dass der Querschnitt des zweiten keilförmigen Abschnitts (9) ein gleichschenkeliges Dreieck ist mit einem Höhenmaß, das zwischen 1 U_{L} und 2 U_{L}, bevorzugt 1,5 U_{L}, beträgt und einem Basismaß, das zwischen 1 U_{L} und 1,5 U_{L}, bevorzugt 1,2 U_{L}, beträgt.

15. Vorrichtung nach einem der Ansprüche 13 oder 14, wobei zwei empfindliche Elemente (4) in dem Fenster (3) angeordnet sind , das durch den Profilkörper (2) hindurch vorgesehen ist, wobei die empfindlichen Elemente (4) eine zylindrische Form des Durchmessers Φ haben und entlang einer Achse angeordnet sind, die zu der Längsachse (L) des Profilkörpers (2) parallel ist, wobei die empfindlichen Elemente (4) so angeordnet sind, dass
- die Distanz zwischen den Längsachsen der zwei empfindlichen Elemente (4) zwischen 1 Φ und 3 Φ beträgt und bevorzugt 2 Φ ist;
- die Distanz zwischen der Längsachse (L) jedes empfindlichen Elements (4) und der Basis des dreieckigen Querschnitts, der für den ersten keilförmigen Abschnitt (7) charakteristisch ist, zwischen 3 Φ und 5 Φ beträgt und bevorzugt 4,5 Φ ist;
- die Distanz zwischen der Längsachse (L) jedes empfindlichen Elements (4) und der Basis des dreieckigen Querschnitts, der für den zweiten keilförmigen Abschnitt (9) charakteristisch ist, zwischen 2 Φ und 3 Φ beträgt und bevorzugt 2,5 Φ ist.

16. Vorrichtung nach einem der vorhergehenden Ansprüche, wobei jede Wand des Profilkörpers (2) im Wesentlichen eben ist.

## Claims

1. A device for measuring at least one physical parameter of a fluid flow, in particular the total air temperature, comprising:
- a profiled body (2) having an elongate shape along a longitudinal axis (L), and having at least two walls arranged contiguous to each other at an acute angle to form a wedge-shaped portion (7), said wedge-shaped portion (7) extending in a direction parallel to the longitudinal axis (L) of the profiled body (2);
- at least one sensing element (4) to measure the physical parameter of the fluid flow, said sensing element (4) being arranged in a window (3) arranged through the profiled body (2), **characterized in that** each of the walls (71; 72)
forming the wedge-shaped portion (7) comprises at least one notch separate from the window (3) said notch forming a deflector angle relative to said wall (71; 72) to weaken the formation of ice on the wedge-shaped portion (7).

2. The device according to claim 1, wherein the profiled body (2) has symmetry relative to a median plane passing through the longitudinal axis (L), the walls (71; 72) forming the wedge-shaped portion (7) comprising the same number of symmetric notches relative to said plane.

3. The device according to one of claims 1 or 2, wherein each notch is of elongate shape in a direction perpendicular to the longitudinal axis (L) of the profiled body (2).

4. The device according to one of claims 1 to 3, wherein each notch does not extend as far as the edge common to the two walls (71; 72) forming the wedge-shaped portion (7).

5. The device according to one of claims 1 to 4, wherein each of the walls (71; 72) forming the wedge-shaped portion (7) comprises three notches, one of the notches being formed opposite the window (3) arranged through the profiled body (2) comprising the sensing element (4).

6. The device according to one of claims 1 to 5, wherein the two walls (71; 72) forming the wedge-shaped portion (7) are arranged at an angle of at least 30°, preferably of between 35° and 40°.

7. The device according to one of claims 1 to 6, wherein the surfaces of the notches formed on each of the walls (71; 72) of the wedge-shaped portion (7) together form an angle of at least 25°, preferably between 25° and 30°, this angle additionally being smaller than the angle formed between the walls (71; 72) of the wedge-shaped portion (7).

8. The device according to one of claims 1 to 7, wherein the profiled body (2) extends from a securing flange (5), said securing flange (5) having a bearing (6) defining a plane for securing the measuring device, and wherein the window (3) comprising the sensing element (4) is arranged in the profiled body (2) at the opposite end relative to the end coupled to the securing flange (5).

9. The device according to one of claims 1 to 8, wherein the profiled body (2) comprises two complementary walls (81; 82) respectively extending from the two walls (71; 72) forming the wedge-shaped portion (7), said complementary walls (81; 82) being substantially parallel to each other and defining a main portion (8) of the profiled body (2).

10. The device according to claim 9, wherein the window (3) comprising the sensing element (4) is formed through the main portion (8) of the profiled body (2) from one of the two complementary walls (81; 82) towards the other of the two complementary walls (81; 82).

11. The device according to one of claims 9 or 10, wherein each of the complementary walls (81; 82) is arranged relative to the corresponding wall of the wedge-shaped portion (7) so as to form a recess.

12. The device according to claim 11, wherein each notch extends as far as the recess formed between the walls (71; 72) of the wedge-shaped portion (7) and the complementary walls (81; 82) of the main portion (8).

13. The device according to one of claims 9 to 12, wherein the profiled body (2) comprises two other complementary walls (91; 92) respectively extending from the two complementary walls (81; 82) parallel to each other and forming the main portion (8), said two other complementary walls (91; 92) also being arranged contiguous to one another at an acute angle to form a second wedge-shaped portion (9), said second wedge-shaped portion (9) extending in a direction parallel to the longitudinal axis (L) of the profiled body (2).

14. The device according to claim 13, wherein the profiled body (2) is sized on the basis of a unit of length U_{L} along the following principles:
- the walls (71; 72) forming the first wedge-shaped portion (7) are identical so that the cross-section of said wedge-shaped portion (7) is an isosceles triangle with a height of size between 2 U_{L} and 4 U_{L}, preferably 3 U_{L}, and a base of size between 1 U_{L} and 3 U_{L}, preferably 1.5 U_{L};
- the complementary walls (81; 82) forming the main portion (8) are identical so that the cross-section of said main portion (8) is a rectangle with a length of size between 1 U_{L} and 3 U_{L}, preferably 2 U_{L}, and a width of size between 1 U_{L} and 1.5 U_{L}, preferably 1.2 U;
- the other complementary walls (91; 92) forming the second wedge-shaped portion (9) are identical so that the cross-section of said second wedge-shaped portion (9) is an isosceles triangle with a height of size between 1 U_{L} and 2 U_{L}, preferably 1.5 U_{L}, and a base of size between 1 U_{L} and 1.5 U_{L}, preferably 1.2 U_{L}.

15. The device according to one of claims 13 or 14, wherein two sensing elements (4) are arranged in the window (3) arranged through the profiled body (2), said sensing elements (4) having a cylindrical shape of diameter Φ and being arranged along an axis parallel to the longitudinal axis (L) of the profiled body (2), said sensing elements (4) being positioned so that:
- the distance between the longitudinal axes of the two sensing elements (4) is between 1 Φ and 3 Φ, and is preferably 2 Φ;
- the distance between the longitudinal axis (L) of each sensing element (4) and the base of the triangular cross-section characteristic of the first wedge-shaped portion (7) is between 3 Φ and 5 Φ, and is preferably 4.5 Φ;
- the distance between the longitudinal axis (L) of each sensing element (4) and the base of the triangular cross-section characteristic of the second wedge-shaped portion (9) is between 2 Φ and 3 Φ, and is preferably 2.5 Φ.

16. The device according to one of the preceding claims, wherein each wall of the profiled body (2) is substantially planar.
